# EUROPÄISCHE PATENTSCHRIFT

(11) **EP 1 382 492 B1**
(45) Veröffentlichungstag und Bekanntmachung des Hinweises auf die Patenterteilung: **14.06.2006**
(21) Anmeldenummer: 03090083.1
(22) Anmeldetag: 26.03.2003
(51) Int. Cl.: B60N 2/30, B60N 2/36

(54) **Kraftfahrzeug mit einem Kraftfahrzeugsitz mit anschliessendem Aufnahmebehälter zur Aufnahme von Kopfstützen**
Automotive vehicle having a vehicle seat with attached container for storing head rests.
Véhicule automobile avec un siège de véhicule comportant un conteneur associé, pour le rangement d'appui-têtes.

(30) Priorität: 02.07.2002 DE 10230624
(43) Veröffentlichungstag der Anmeldung: 21.01.2004
(73) Patentinhaber: Volkswagen AG, 38436 Wolfsburg (DE)
(72) Erfinder: Scholz, Eckhard, 38154 Königslutter (DE); Tarach, Hilmar, 38518 Gifhorn (DE); Ziehres, Bodo, 38350 Helmstedt (DE)
(74) Vertreter: Schneider, Henry

(56) Entgegenhaltungen:
- EP-A- 0 633 160
- DE-A- 3 729 642
- DE-A- 19 543 927
- DE-A- 19 641 089
- DE-A- 19 728 584
- FR-A- 2 811 948
- US-A- 3 311 405

## Beschreibung

Die Erfindung betrifft ein Kraftfahrzeug mit einem Kraftfahrzeugsitz mit den im Oberbegriff des Anspruchs 1 genannten Merkmalen.

Bei bekannten, gattungsgemäßen Kraftfahrzeugen beinhaltet die Serienausstattung zumeist eine dreisitzige Rücksitzbank mit drei Fondkopfstützen, die in ihrer Funktionsposition mit jeweils zwei Haltestützen in zugeordneten ersten Stützenaufnahmen einer Fondsitzlehne abnehmbar gehalten sind. Dabei kann die dreisitzige Rücksitzbank in der Sitzanordnung der Kraftfahrzeuge als eine zweite oder dritte Sitzreihe ausgeführt sein. Bekannt sind verschiedene Lösungen, die abnehmbaren Fondkopfstütze auf verschiedene Art und Weise abzusenken, umzuklappen oder dergleichen oder sie an anderen günstigen Stellen zu verstauen, wenn beispielsweise die Sicht des Fahrers nach hinten beeinträchtigt ist oder beim Umklappen einer Sitzlehne des Kraftfahrzeugsitzes die Fondkopfstützen störend wirken.

Bekannt ist die Druckschrift DE 196 41 089 A1, die einen Fahrzeugsitz, insbesondere einen Kraftfahrzeugsitz offenbart, der ein Sitzpolster, das um einen Drehpunkt schwenkbar ist, eine Rückenlehne, die um eine Welle winkelig bewegbar ist, sowie eine Kopfstütze, die an der Rückenlehne abnehmbar angebracht ist, aufweist, wobei die Kopfstütze ein Paar von sich nach abwärts erstreckenden Halterungsstangen aufweist. Ein Kopfstützenunterbringungsmechanismus weist zudem einen Kopfstützenunterbringungsraum auf, der zwischen dem Sitzpolster und der Rückenlehne begrenzt ist, wenn das Sitzpolster nach vorne angehoben ist und die Rückenlehne in Richtung zu dem Sitzpolster nach vorne abgesenkt ist, wobei die Kopfstütze von der Rückenlehne abgenommen ist. Ferner weist der Kopfstützenunterbringungsmechanismus ein Paar von Armen auf, die an dem Sitzpolster angeordnet und mit dem Dreh- oder Schwenkpunkt verbunden sind, um die Kopfstütze in eine vorgegebene Lage zu tragen, wenn das Sitzpolster nach vorwärts angehoben ist. Der Kopfstützenunterbringungsraum weist derartige Abmessungen auf, dass er dazu befähigt ist, die sich von der Kopfstütze aus nach abwärts erstreckenden Halterungsstangen unterzubringen, wenn die Kopfstütze an den Armen getragen ist. Nachteilig dabei ist, dass der Kopfstützenunterbringungsmechanismus sehr aufwendig ist und für jede Kopfstütze der Rückenlehne separat eingerichtet werden muss. Zudem entsteht keine einheitliche ebene Fläche, da ein Teil der Kopfstütze oberhalb der Rückseite der Rückenlehne herausragt.

Bekannt ist weiterhin die Druckschrift DE 195 43 927 A1, die ebenfalls eine dreisitzige Fondbank beschreibt, die ein Sitzkissen und eine Rückenlehne sowie jedem Platz zugeordnete Kopfstützen aufweist. Dabei weist die dreisitzige Fondbank ein von einer Fondkissenschale aufgenommenes Sitzkissen und eine Rückenlehne auf, mit einem der Fondbank vorgelagerten Fußraum, mit drei jeweils einem Sitzplatz zugeordneten Kopfstützen, die jeweils einen in Führungen in der Rückenlehne verschieblich gehaltenen Stützbügel und ein daran befestigtes Kopfpolster aufweisen, von denen zumindest die mittlere Kopfstütze zwecks Abnehmen von der Rückenlehne aus ihren Führungen herausnehmbar ist. Zudem ist im Fahrzeüginnem zum lagesicheren Verstauen der von der Rückenlehne abgenommenen Kopfstütze eine unter der Fondkissenschale ausgebildete Aufnahme angeordnet, die so ausgebildet ist, dass bei in die Aufnahme eingestecktem Stützbügel das Kopfpolster der Kopfstütze in dem dem mittleren Sitzplatz der Fondbank vorgelagerten Fußraumbereich einliegt. Diese bekannte Lösung verwendet bereits die abnehmbare Kopfstütze, wodurch ein wesentlich geringerer mechanischer Aufwand im Vergleich zur Druckschrift DE 196 41 089 C2 notwendig ist. Nachteilig hierbei ist jedoch, dass die Kopfstütze unter der Fondkissenschale angeordnet werden muss, wodurch zum einen ein Zwischenraum zwischen der vorliegenden Sitzreihe notwendig ist und zum anderen keine vollständig ebene Fläche zwischen der vorderen Sitzreihe und der Rückseite der umklappbaren Fondbank möglich ist.

Aus dem Stand der Technik geht ferner die Druckschrift DE 37 29 642 C2 hervor, die eine Rücksitzanordnung mit Kopfstütze für Kraftfahrzeuge, bei der mindestens ein Rückenlehnenteil vorgesehen ist, dessen obere Stirnseite in der Normallage die Kopfstütze aufnimmt, der zur Vergrößerung des Laderaums in Richtung des Sitzteiles abklappbar und auf diesen auflegbar ist und hinter der seitlichen Konsole zur Halterung einer Laderaumabdeckung vorgesehen ist, und eine in jeder seitlichen Konsole befindliche Aufnahmevorrichtung für Kopfstützen offenbart. Nachteilig hierbei ist jedoch, dass die in jeder seitlichen Konsole befindlichen Aufnahmevorrichtungen für die Kopfstütze sichtbar sind und beim Verladen von Ladegut in den Laderaum störend wirken. Zudem verhindern die Kopfstützen in den seitlichen Konsolen die Einbringung von anderen kraftfahrzeugtypischen Elementen, wie beispielsweise Lüftungselementen oder Lautsprechern oder dergleichen.

Außerdem beschreibt die gattungsbildende US 3 311 405 einen Kraftfahrzeugsitz in einem Kraftfahrzeug, der wenigstens eine Sitzlehne, insbesondere Fondsitzlehne, umfasst, wobei die wenigstens eine Sitzlehne in Richtung eines Sitzteiles umklappbar ist, wobei sich an eine Unterseite der Sitzlehne eine Vertiefung ausbildet, die durch ein an der Rückseite der Sitzlehne (bei umgeklappter Sitzlehne) ausklappbares Bodenpaneel verschließbar ist, so dass in dem Kraftfahrzeug eine im Wesentlichen ebene Fläche ausgebildet wird.

Schließlich offenbart die Druckschrift DE 197 28 584 A1 ein Kraftfahrzeug mit wenigstens einer Kopfstütze an einer Sitzlehne, vorzugsweise Fondsitzlehne, wobei die wenigstens eine Kopfstütze in ihrer Funktionsposition mit Haltestützen in zugeordneten ersten Stützenaufnahmen der Sitzlehne abnehmbar gehalten ist und im Bereich eines Gepäckraums zweite Stützenaufnahmen angeordnet sind, in die eine abgenommene Kopfstütze in einer Ablageposition mit ihren Haltestützen einsteckbar und festlegbar ist, wobei die zweite Stützenaufnahme als durchgängiger Gepäckraumboden im Randbereich einer darunter angeordneten Reserveradmulde angebracht ist, so dass die Stützenaufnahme und/oder die Haltestützen der abgelegten Kopfstütze in einem Freiraum der Reserveradmulde aufgenommen sind.

Der Erfindung liegt daher die Aufgabe zugrunde, ein Kraftfahrzeug mit mindestens einem Kraftfahrzeugsitz auszubilden, mittels dem die genannten Nachteile vermieden werden, so dass bei umgeklappter Sitzlehne eine Ladefläche entsteht und eine einfache Unterbringung der Kopfstützen gewährleistet ist.

Diese Aufgabe wird durch ein Kraftfahrzeug mit den im Anspruch 1 genannten Merkmalen gelöst.

Gemäß Anspruch 1 ist in einem Kraftfahrzeug mindestens ein Kraftfahrzeugsitz mit wenigstens einer abnehmbaren Kopfstütze an wenigstens einer Sitzlehne, insbesondere Fondsitzlehne, die in Richtung eines Sitzteiles umklappbar ist, angeordnet. Dadurch, dass sich an einer Unterseite der Sitzlehne mindestens ein Aufnahmebehälter anschließt, dessen Oberseite gemeinsam mit einer Rückseite der Sitzlehne - bei umgeklappter Sitzlehne - eine im Wesentlichen ebene Fläche ausbildet, wobei die wenigstens eine Kopfstütze in dem Aufnahmebehälter anordbar ist, wird in einfacher vorteilhafter Weise eine annähernd ebene und unterbrechungsfreie Ladefläche erzeugt und eine einfache Möglichkeit zur Unterbringung der Kopfstütze geschaffen.

In bevorzugter Ausgestaltung der Erfindung weist der Aufnahmebehälter eine vertikale Vorderwand und eine vertikale Rückwand sowie eine erste vertikale Seitenwand und eine zweite vertikale Seitenwand auf. Der Aufnahmebehälter weist zudem einen Boden auf, der vorzugsweise einen zweiten öffenbaren Deckel, insbesondere für ein unterhalb des Aufnahmebehälters anordbares Pannen-Set oder dergleichen, besitzt. Ein erster öffenbarer Deckel dient als Abdeckung des Aufnahmebehälters, wobei dieser erste öffenbare Deckel einen Verriegelungsmechanismus aufweist, mittels dem der erste Deckel vorzugsweise mit der vertikalen Vorderwand verriegelbar ist.

In weiterer bevorzugter Ausgestaltung der Erfindung weist die Rückwand und/oder die Vorderwand und/oder die erste oder zweite Seitenwand und/oder der Boden wenigstens ein Aufnahmeelement für wenigstens ein Stützenelement der mindestens einen Kopfstütze auf.

Die Aufnahmeelemente sind dabei vorzugsweise einfache Löcher oder alle weiteren denkbaren Elemente zur Befestigung der Stützenelemente der Kopfstütze oder der Kopfstütze selbst.

Erfindungsgemäß ist ferner bevorzugt, dass die Rückwand des Aufnahmebehälters annähernd ohne Zwischenraum an der Rückseite der nicht umgeklappten Sitzlehne anschließt. Dabei ist das Sitzteil mit der Sitzlehne über einen ersten Klappmechanismus verbunden und weist zudem einen zweiten Klappmechanismus auf, von dem ein erstes Führungselement ausgeht, welches mit mindestens einer Führungsschiene verbunden ist. Die Sitzlehne ist zudem durch ein zweites Führungselement in der mindestens einen Führungsschiene geführt.

In weiterer bevorzugter Ausgestaltung der Erfindung sind das Sitzteil und die Sitzlehne durch den ersten und zweiten Klappmechanismus gleichzeitig bewegbar, wobei sich das Sitzteil nach vorne verlagert und die Sitzlehne so umklappt, dass die Rückwand des Aufnahmebehälters annähernd ohne Zwischenraum an die Unterseite der umgeklappten Sitzlehne anschließt. Dabei bildet die Rückseite der Sitzlehne gemeinsam mit dem Deckel des Aufnahmebehälters eine nahezu ebene Ladefläche aus.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: einen Kraftfahrzeugsitz mit einem Aufnahmebehälter (Kargobox);
- Figur 2: einen teilweise geklappten Kraftfahrzeugsitz an dem Aufnahmebehälter (Kargobox);
- Figur 3: einen geklappten Kraftfahrzeugsitz an dem Aufnahmebehälter (Kargobox);
- Figur 4: eine schematische Anordnungsskizze von geklappten Kraftfahrzeugsitzen zu dem Aufnahmebehälter (Kargobox);
- Figur 5: eine Außenansicht des Aufnahmebehälters (Kargobox);
- Figur 6: eine Innenansicht des Aufnahmebehälters (Kargobox) ohne angeordnete Kopfstützen und
- Figur 7: eine Innenansicht des Aufnahmebehälters (Kargobox) mit angeordneten Kopfstützen.

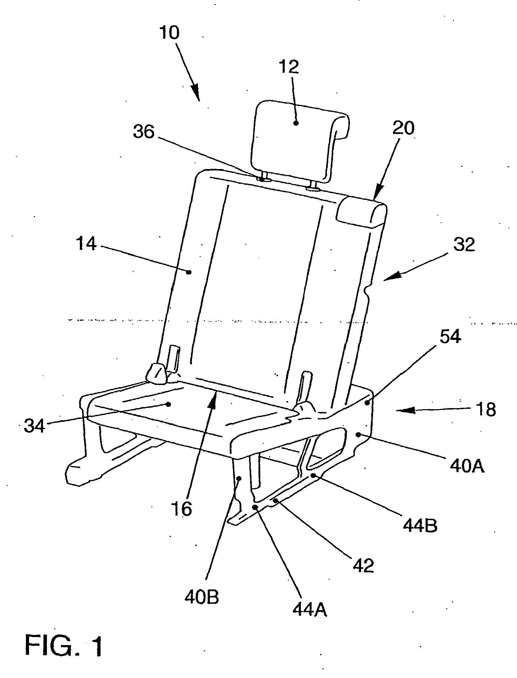

Figur 1 zeigt einen Kraftfahrzeugsitz 10, insbesondere einen Fondsitz, für ein beliebiges Kraftfahrzeug. Der Kraftfahrzeugsitz 10 weist eine Sitzlehne 14 und ein Sitzteil 34 auf. An die Sitzlehne 14 schließt in nicht geklapptem Zustand an einer Unterseite 16 der Sitzlehne 14 das Sitzteil 34 an. An einer Oberseite 20 der Sitzlehne 14 sind Stützenelemente 36 angeordnet, an denen eine Kopfstütze 12 ausgebildet ist. Die Kopfstütze 12 ist mittels der Stützenelemente 36 in die Oberseite 20 der Sitzlehne 14 steckbar und somit durch manuelle Betätigung abnehmbar beziehungsweise anbringbar. An einer Rückseite 32 der Sitzlehne 14 ist ein Aufnahmebehälter 18 (Kargobox) angeordnet. Der Kraftfahrzeugsitz 10 weist einen ersten Klappmechanismus 40A und einen zweiten Klappmechanismus 40B auf. Figur 1 zeigt zudem ein erstes Führungselement 44A und ein zweites Führungselement 44B, welches den Kraftfahrzeugsitz 10 mit einer Führungsschiene 42 verbindet. Im Ausführungsbeispiel Figur 1 ist der Kraftfahrzeugsitz 10 beidseitig auf zwei Führungsschienen 42 gelagert, wobei das Sitzteil 34 beidseitig über das Führungselement 44A und den zweiten Klappmechanismus 40B mit der Führungsschiene 42 verbunden ist. Der erste Klappmechanismus 40A verbindet beidseitig die Sitzlehne 14 und das Sitzteil 34. Ferner ist die Sitzlehne 14 über das zweite Führungselement 44B jeweils mit den Führungsschienen 42 verbunden.

Figur 1 zeigt zudem, dass der Aufnahmebehälter 18 (Kargobox) sich unmittelbar an die Rückseite 32 der nicht umgeklappten Sitzlehne 14 anschließt, so dass ein Zwischenraum (Spalt) 54 zwischen Aufnahmebehälter 18 und Sitzlehne 14 minimal ist.

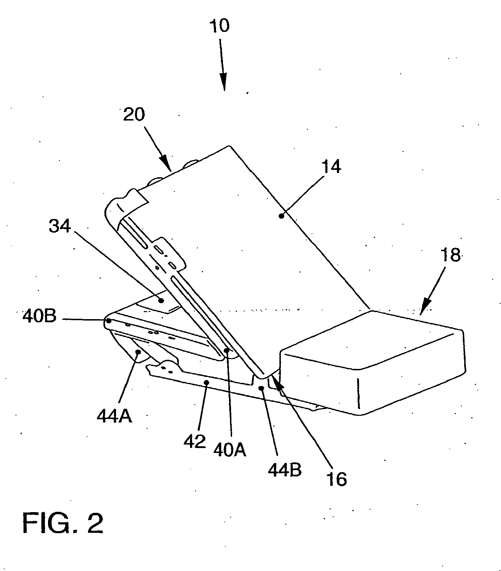

Figur 2 zeigt den Kraftfahrzeugsitz 10 in teilweise geklapptem Zustand. Dabei wird deutlich, dass sich die Sitzlehne 14 über den ersten Klappmechanismus 40A geführt durch das zweite Führungselement 44B in der Führungsschiene 42 auf das Sitzteil 34 umklappt.

Zur Bereitstellung des nötigen Raumes zum Umklappen der Sitzlehne 14 im Bereich der Unterseite 16 der Sitzlehne 14 ist das Sitzteil 34 über den zweiten Klappmechanismus 40B jeweils beweglich über die zweiten Führungselemente 44B in den Führungsschienen 42 verlagerbar. Die Elemente 40B, 44B und 42 sind der Übersichtlichkeit halber nur einseitig dargestellt. Mit Hilfe des ersten Klappmechanismus 40A, des zweiten Klappmechanismus 40B, des ersten Führungselementes 44A und des zweiten Führungselementes 44B und der die Führungselemente 44A, 44B aufnehmenden Führungsschienen 42, die vorzugsweise jeweils beidseitig an der Sitzlehne 14 beziehungsweise am Sitzteil 34 angeordnet sind, ist der Kraftfahrzeugsitz 10 so klappbar, dass die Unterseite 16 der Sitzlehne 14 sich nahezu bündig an den Aufnahmebehälter 18 (Kargobox) anlegt. Die Elemente 40A, 44A sind ebenfalls der Übersichtlichkeit halber nur einseitig dargestellt.

Figur 2 zeigt ferner, dass die Kopfstütze 12 an der Oberseite 20 der Sitzlehne 14 entnommen ist.

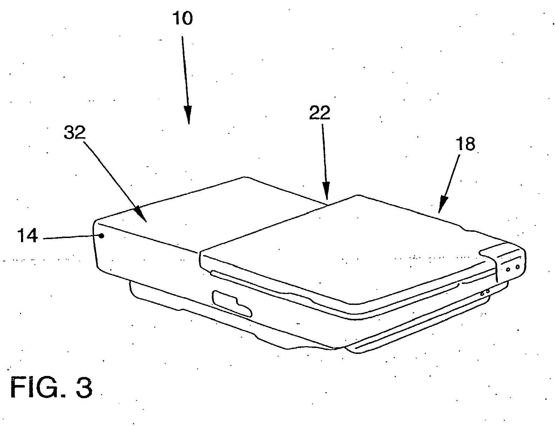

Figur 3 zeigt den komplett umgeklappten Kraftfahrzeugsitz 10. Die Figur 3 zeigt, dass die Rückseite der Sitzlehne 14 mit dem Auffangbehälter 18 (Kargobox) eine ebene Fläche 22 - als Laderaumabdeckung - ausbildet.

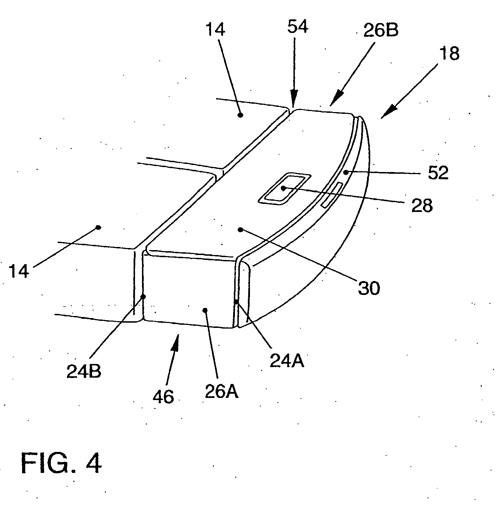

Figur 4 zeigt beispielhaft zwei Sitzlehnen 14 eines Kraftfahrzeugsitzes 10 - beispielsweise geteilte Sitzlehnen 14 einer Rücksitzbank oder zwei Sitzlehnen 14 von einzelnen Kraftfahrzeugsitzen 10 - die im umgeklappten Zustand an den Aufnahmebehälter 18 - im Weiteren Kargobox genannt- anschließen. Hierbei bildet sich der minimale Spalt 54 zwischen Sitzlehne 14 und Kargobox 18 aus.

Die Kargobox 18 weist eine vertikale Rückwand 24B und eine vertikale Vorderwand 24A auf, die über eine erste vertikale Seitenwand 26A und eine zweite vertikale Seitenwand 26B miteinander verbunden sind. Die Kargobox bildet ferner einen Boden 46 und einen ersten Deckel 30 aus. Der Deckel 30 weist eine Verriegelungsvorrichtung 28 auf. Die Kargobox 18 ist - wie aus Figur 4 ersichtlich - hinter einem eine Schlossträgerabdeckung 52 tragenden Bauteil angeordnet. Die Schlossträgerabdeckung 52 dient als Aufnahmeteil eines Verriegelungsmechanismus einer Heckklappe oder dergleichen des Kraftfahrzeuges.

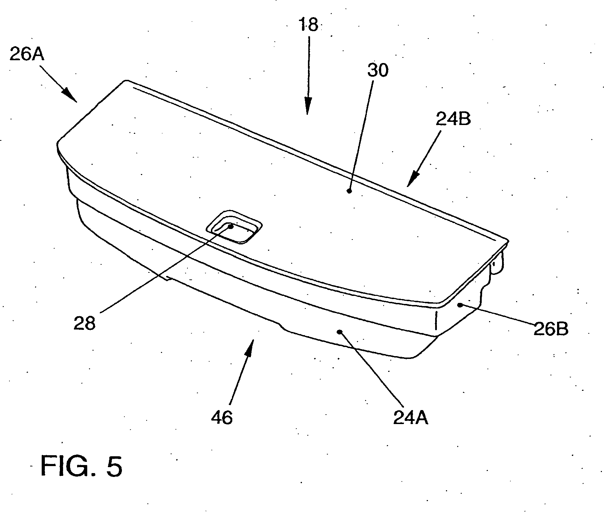

Figur 5 zeigt die Kargobox 18 in einer Außenansicht. Dabei sind gleiche Teile mit gleichen Bezugszeichen wie in Figur 4 bezeichnet.

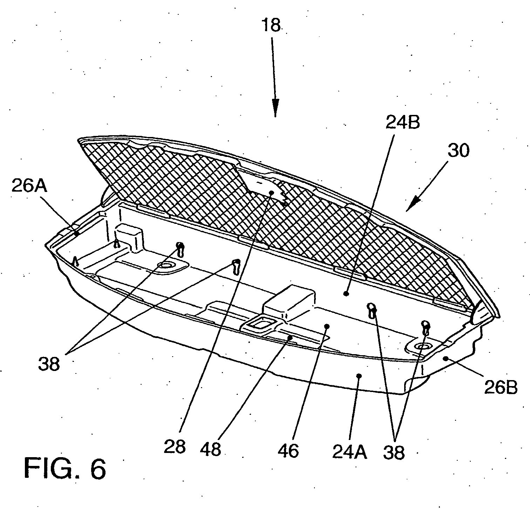

Figur 6 zeigt eine geöffnete Kargobox 18, wobei wiederum gleichen Teilen gleiche Bezugszeichen zugeordnet sind. Figur 6 zeigt die Kargobox 18 bei geöffnetem ersten Deckel 30, wodurch Aufnahmeelemente 38 in der Rückwand 24B sichtbar sind. Die Aufnahmeelemente 38 dienen zur Aufnahme der Stützenelemente 36 der Kopfstützen 12.

Das Ausführungsbeispiel zeigt in Figur 6 angeordnete Aufnahmeelemente 38, vorzugsweise Löcher, in der Rückwand 24B, jedoch ist die Anordnung von Aufnahmeelementen 38 nicht auf die Rückwand 24B beschränkt, sondern eine Anordnung ist ebenfalls in der Vorderwand 24A oder den Seitenwänden 26A, 26B denkbar.

Figur 6 zeigt ferner einen zweiten Deckel 48 im Boden 46 der Kargobox 18 mit einer separaten Verriegelungsvorrichtung. Unterhalb des zweiten Deckels 48 ist beispielsweise ein Pannen-Set 50 für das Kraftfahrzeug unterbringbar.

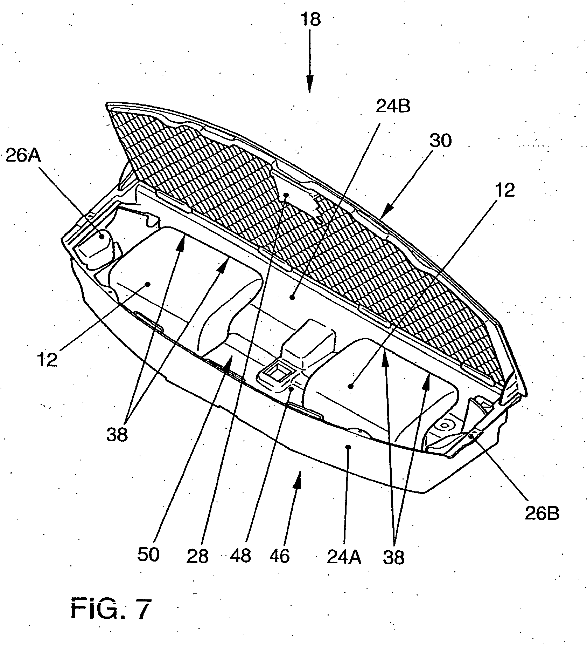

Figur 7 zeigt die geöffnete Kargobox 18 mit in der Kargobox 18 angeordneten Kopfstützen 12, die an ihren Stützenelementen 36 in die Aufnahmeelemente 38 gesteckt sind. Figur 7 zeigt, dass nach Unterbringung der Kopfstützen 12 in der Kargobox 18 der zweite Deckel 48 frei bleibt, so dass ein ungehindertes Öffnen des zweiten Deckels 48 zur Entnahme beispielsweise des Pannen-Sets 50 weiterhin möglich ist. Die weiteren Bezugszeichen der Figur 7 entsprechen den in den vorhergehenden Figuren beschriebenen Teilen.

### BEZUGSZEICHENLISTE

- 10: Kraftfahrzeugsitz
- 12: Kopfstütze
- 14: Sitzlehne
- 16: Unterseite
- 18: Aufnahmebehälter (Kargobox)
- 20: Oberseite
- 22: ebene Fläche
- 24A: Vorderwand
- 24B: Rückwand
- 26A: erste Seitenwand
- 26B: zweite Seitenwand
- 28: Verriegelungsvorrichtung
- 30: erster Deckel
- 32: Rückseite
- 34: Sitzteil
- 36: Stützenelement
- 38: Aufnahmeelemente
- 40A: erster Klappmechanismus
- 40B: zweiter Klappmechanismus
- 42: Führungsschiene
- 44A: erstes Führungselement
- 44B: zweites Führungselement
- 46: Boden
- 48: zweiter Deckel
- 50: Pannen-Set
- 52: Schlossträgerabdeckung
- 54: Zwischenraum (Spalt)

## Patentansprüche

1. Kraftfahrzeug mit mindestens einem Kraftfahrzeugsitz (10), der wenigstens eine abnehmbare Kopfstütze (12) an wenigstens einer Sitzlehne (14), insbesondere Fondsitzlehne, umfasst, wobei die wenigstens eine Sitzlehne (14) in Richtung eines Sitzteiles (34) umklappbar ist, wobei sich an eine Unterseite (16) der Sitzlehne (14) mindestens ein Aufnahmebehälter (18) anschließt, der sich - bei nicht umgeklappter Sitzlehne - (14) an die Rückseite (32) der Sitzlehne (14) anschließt, **dadurch gekennzeichnet, dass** der Aufnahmebehälter bei umgeklappter und nicht-umgeklappter Sitzlehne einen öffenbaren Deckel (30) aufweist, der gemeinsam mit der Rückseite (32) der Sitzlehne (14) - bei umgeklappter Sitzlehne (14) - eine im Wesentlichen ebene Fläche (22) ausbildet, wobei die wenigstens eine Kopfstütze (12) in dem Aufnahmebehälter (18) anordbar ist.

2. Kraftfahrzeug nach Anspruch 1, **dadurch gekennzeichnet, dass** der Aufnahmebehälter (18) eine vertikale Vorderwand (24A) und eine vertikale Rückwand (24B) aufweist.

3. Kraftfahrzeug nach einem der vorhergehenden Ansprüche, **dadurch gekennzeichnet, dass** der mindestens eine Aufnahmebehälter (18) mindestens eine erste vertikale Seitenwand (26A) und eine zweite vertikale Seitenwand (26B) aufweist.

4. Kraftfahrzeug nach einem der vorhergehenden Ansprüche, **dadurch gekennzeichnet, dass** der Aufnahmebehälter (18) einen Boden (46) aufweist.

5. Kraftfahrzeug nach Anspruch 1, **dadurch gekennzeichnet, dass** der Deckel (30) über ein Verriegelungsmechanismus (28) verschließbar ist.

6. Kraftfahrzeug nach einem der vorhergehenden Ansprüche, **dadurch gekennzeichnet, dass** der Boden (46) einen zweiten offenbaren Deckel (48), insbesondere zum Erreichen eines Pannen-Sets (50) oder dergleichen, aufweist.

7. Kraftfahrzeug nach einem der vorhergehenden Ansprüche, **dadurch gekennzeichnet, dass** die Rückwand (24B) und/oder die Vorderwand (24A) und/oder die Seitenwände (26A, 26B) und/oder der Boden (46) wenigstens ein Aufnahmeelement (38) für wenigstens eine Kopfstütze (12) aufweist.

8. Kraftfahrzeug nach einem der vorhergehenden Ansprüche, **dadurch gekennzeichnet, dass** die Rückwand (24B) des Aufnahmebehälters (18) im Wesentlichen bündig an die Rückseite (32) der nicht umgeklappten Sitzlehne (14) anschließt.

9. Kraftfahrzeug nach Anspruch 7, **dadurch gekennzeichnet, dass** die Aufnahmeelemente (38) Löcher zur Aufnahme von Stützelementen (36) der Kopfstütze (12) sind.

10. Kraftfahrzeug nach einem der vorhergehenden Ansprüche, **dadurch gekennzeichnet, dass** das Sitzteil (34) mit der Sitzlehne (14) über einen ersten Klappmechanismus (40A) verbunden ist.

11. Kraftfahrzeug nach einem der vorhergehenden Ansprüche, **dadurch gekennzeichnet, dass** das Sitzteil (34) einen zweiten Klappmechanismus (40B) aufweist, von dem ein erstes Führungselement (44A) ausgeht und welches mit mindestens einer Führungsschiene (42) verbunden ist.

12. Kraftfahrzeug nach einem der vorhergehenden Ansprüche, **dadurch gekennzeichnet, dass** die Sitzlehne (14) andererseits durch ein zweites Führungselement (44B) in der mindestens einen Führungsschiene (42) geführt ist.

13. Kraftfahrzeug nach einem der vorhergehenden Ansprüche, **dadurch gekennzeichnet, dass** die Sitzteile (34) und die Sitzlehne (14) gleichzeitig verlagerbar sind.

14. Kraftfahrzeug nach einem der vorhergehenden Ansprüche, **dadurch gekennzeichnet, dass** die Rückwand (24B) des Aufnahmebehälters (18) sich im Wesentlichen bündig an die Unterseite (16) der umgeklappten Sitzlehne (14) anschließt.

## Claims

1. Automotive vehicle having at least one vehicle seat (10) which comprises at least one removable head rest (12) on at least one seat back (14), in particular rear seat back, the at least one seat back (14) being able to be folded over in the direction of a seat part (34), with a lower side (16) of the seat back (14) being adjoined by at least one container (18) which - when the seat back (14) is not folded over - adjoins the rear side (32) of the seat back (14), **characterized in that**, when the seat back (14) is folded over and when it is not folded over, the container has an openable lid (30) which - when the seat back (14) is folded over - forms an essentially flat surface (22) together with the rear side (32) of the seat back (14), with it being possible for the at least one head rest (12) to be arranged in the container (18).

2. Automotive vehicle according to Claim 1, **characterized in that** the container (18) has a vertical front wall (24A) and a vertical rear wall (24B) .

3. Automotive vehicle according to one of the preceding claims, **characterized in that** the at least one container (18) has at least one first vertical side wall (26A) and one second vertical side wall (26B).

4. Automotive vehicle according to one of the preceding claims, **characterized in that** the container (18) has a base (46).

5. Automotive vehicle according to Claim 1, **characterized in that** the lid (30) is closable by means of a locking mechanism (28).

6. Automotive vehicle according to one of the preceding claims, **characterized in that** the base (46) has a second openable lid (48), in particular for reaching a breakdown kit (50) or the like.

7. Automotive vehicle according to one of the preceding claims, **characterized in that** the rear wall (24B) and/or the front wall (24A) and/or the side walls (26A, 26B) and/or the base (46) has/have at least one receiving element (38) for at least one head rest (12).

8. Automotive vehicle according to one of the preceding claims, **characterized in that** the rear wall (24B) of the container (18) adjoins the rear side (32) of the seat back (14), which is not folded over, in an essentially flush manner.

9. Automotive vehicle according to Claim 7, **characterized in that** the receiving elements (38) are holes for receiving supporting elements (36) of the head rest (12).

10. Automotive vehicle according to one of the preceding claims, **characterized in that** the seat part (34) is connected to the seat back (14) via a first hinged mechanism (40A).

11. Automotive vehicle according to one of the preceding claims, **characterized in that** the seat part (34) has a second hinged mechanism (40B) from which a first guide element (44A) emerges which is connected to at least one guide rail (42).

12. Automotive vehicle according to one of the preceding claims, **characterized in that** the seat back (14) is guided on the other side in the at least one guide rail (42) by a second guide element (44B).

13. Automotive vehicle according to one of the preceding claims, **characterized in that** the seat parts (34) and the seat back (14) can be displaced at the same time.

14. Automotive vehicle according to one of the preceding claims, **characterized in that** the rear wall (24B) of the container (18) adjoins the lower side (16) of the folded-over seat back (14) in an essentially flush manner.

## Revendications

1. Véhicule automobile avec au moins un siège de véhicule automobile (10) comprenant au moins un appuie-tête amovible (12) sur au moins un dossier de siège (14), notamment un dossier de siège du fond, le au moins un dossier de siège (14) étant rabattable en direction d'une partie assise (34), au moins un bac de rangement (18) se raccordant sur une face inférieure (16) du dossier de siège (14) qui (lorsque le dossier de siège (14) n'est pas rabattu), se raccorde sur la face arrière (32) du dossier de siège (14) **caractérisé en ce que** le bac de rangement comporte un couvercle (30) pouvant s'ouvrir (lorsque le dossier de siège (14) est rabattu et n'est pas rabattu), le bac de rangement formant en association avec la face arrière (32) du dossier de siège (14) (lorsque le dossier de siège (14) est rabattu) une surface sensiblement plane (22), le au moins un appuie-tête (12) pouvant être disposé dans le bac de rangement (18).

2. Véhicule automobile selon la revendication 1, **caractérisé en ce que** le bac de rangement (18) comporte une paroi avant verticale (24A) et une paroi arrière verticale (24B).

3. Véhicule automobile selon l'une quelconque des revendications précédentes, **caractérisé en ce que** le au moins un bac de rangement (18) comporte au moins une première paroi latérale verticale (26A) et une deuxième paroi latérale verticale (26B).

4. Véhicule automobile selon l'une quelconque des revendications précédentes, **caractérisé en ce que** la bac de rangement (18) comporte un fond (46).

5. Véhicule automobile selon la revendication 1, **caractérisé en ce que** le couvercle (30) peut être fermé par l'intermédiaire d'un mécanisme de verrouillage (28).

6. Véhicule automobile selon l'une quelconque des revendications précédentes, **caractérisé en ce que** le fond (46) comporte un deuxième couvercle (48) pouvant s'ouvrir, notamment pour atteindre un kit de dépannage (50) ou similaire.

7. Véhicule automobile selon l'une quelconque des revendications précédentes, **caractérisé en ce que** la paroi arrière (24B) et/ou la paroi avant (24A) et/ou les parois latérales (26A, 26B) et/ou le fond (46) comporte au moins un élément de logement (38) pour au moins un appuie-tête (12).

8. Véhicule automobile selon l'une quelconque des revendications précédentes, **caractérisé en ce que** la paroi arrière (24B) du bac de rangement (18) se raccorde sensiblement à fleur de la face arrière (32) du dossier de siège (14) non rabattu.

9. Véhicule automobile selon la revendication 7, **caractérisé en ce que** les éléments de logement (38) sont des trous pour loger des éléments de support (36) de l'appuie-tête (12).

10. Véhicule automobile selon l'une quelconque des revendications précédentes, **caractérisé en ce que** la partie assise (34) est reliée au dossier de siège (14) par l'intermédiaire d'un premier mécanisme de rabattement (40A).

11. Véhicule automobile selon l'une quelconque des revendications précédentes, **caractérisé en ce que** la partie assise (34) comporte un deuxième mécanisme de rabattement (40B) duquel part un premier élément de guidage (44A) et qui est relié à au moins un rail de guidage (42).

12. Véhicule automobile selon l'une quelconque des revendications précédentes, **caractérisé en ce que** la dossier de siège (14) est guidé d'autre part par un deuxième élément de guidage (44B) dans le au moins un rail de guidage (42).

13. Véhicule automobile selon l'une quelconque des revendications précédentes, **caractérisé en ce que** les parties assises (34) et le dossier de siège (14) peuvent être déplacés simultanément.

14. Véhicule automobile selon l'une quelconque des revendications précédentes, **caractérisé en ce que** la paroi arrière (24B) du bac de rangement (18) se raccorde sensiblement à fleur de la face inférieure (16) du dossier de siège (14) rabattu.
